# EUROPEAN PATENT SPECIFICATION

(11) **EP 0 378 449 B1**
(45) Date of publication and mention of the grant of the patent: **21.08.1996**
(21) Application number: 90300425.7
(22) Date of filing: 15.01.1990
(51) Int. Cl.: G11B 27/28, G11B 11/10, G11B 27/031, G11B 27/10, G11B 20/18

(54) **Information recording and retrieval system**
Informationsaufzeichnungs- und Informationswiederherstellungssystem
Système pour enregistrer et reproduire des informations

(30) Priority: 13.01.1989 JP 7101/89
(43) Date of publication of application: 18.07.1990
(73) Proprietor: SHARP KABUSHIKI KAISHA, Osaka 545 (JP)
(72) Inventor: Maeda, Shigemi, Yamatokoriyama-shi, Nara-ken (JP); Terashima, Shigeo, Tenri-shi, Nara-ken (JP)
(74) Representative: Brown, Kenneth Richard

(56) References cited:
- EP-A- 0 164 131
- EP-A- 0 248 536
- EP-A- 0 279 209
- EP-A- 0 281 415
- EP-A- 0 288 571
- EP-A- 0 292 917
- EP-A- 0 310 678
- WO-A-88/08197
- DE-A- 3 621 263
- FR-A- 2 507 045
- AUDIO. vol. 71, no. 3, March 1987, PHILADELPHIA US POHLMANN ;page 26,28 and 30: "MINDING YOUR P's AND Q's"

## Description

### FIELD OF THE INVENTION

The present invention relates to information recording and retrieval apparatus capable of recording information on and playing it back from a rewritable recording medium which has absolute addresses. See, for example, EP-A-0,288,571.

### BACKGROUND OF THE INVENTION

So-called compact disks (hereinafter referred to as "CDs") are conventionally known as a disc-shaped recording medium in which information such as music programs is recorded in a digital form.

Such CDs are used for playback only. In a CD for music programs, for example, a plurality of programs are recorded in sequence on the disk, and an area called "TOC" (Table of Contents) is provided in the inner-most part of the disk, i.e., a lead-in area, the TOC area storing information on the record starting position of each program. An information retrieval system for use with the above CD is designed to read the information stored in the TOC area when the CD is mounted therein, so as to recognize the number of programs stored in the mounted CD and the record starting position of each program. When starting the playback of a program later, the retrieval system accesses a desired program at high speed, using the information in the TOC area.

There has been a strong need for the development of an information recording and retrieval system with which the user can arbitrarily record information such as music programs, since the conventional CDs as mentioned above are designed for playback use only. Moreover, it is desired that the information recording and retrieval system is provided with additional value, i.e., compatibility with the conventional CDs.

In order to meet this demand, one such information recording and retrieval system used for rewritable magneto-optical disks has been proposed. This information recording and retrieval system can access a non-recorded area in a rewritable disk and performs so-called CLV (Constant Linear Velocity) control like a conventional CD player, with the use of absolute addresses at the time of recording information. The above disk is designed to have the absolute addresses in the form of pit alignment, which are pre-formed in the manufacturing process, in order to be rotatively controlled by the CLV method. This recording and retrieval system records information in the rewritable disk with the same signal format as those of CDs.

In the above rewritable disk, a TOC area is pre-formed, and an absolute address for the record starting position of each program is recorded in the TOC area so as to correspond to the program number when the recording of the program is completed, thereby to renew the contents of the TOC area.

With the use of the recording and retrieval system, new programs can be recorded in the program area of the disk where programs have been already stored, but it often occurs that the new programs are not successively recorded in a certain order in the program area (i.e. information recording area) of the disk like programs stored in a conventional CD.

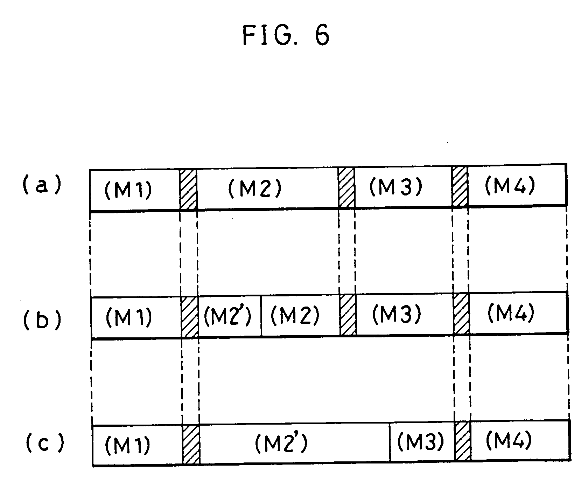

For example, when music programs M1 to M4 are already recorded in the program area of the disk as shown in Fig. 6(a), supplemental data are stored in the TOC area as shown in Table 1, these data being composed of the record starting position and record terminating position of each of the programs M1 to M4 as well as the program number thereof.

**TABLE 1**

| PROGRAM NO. | RECORD STARTING POSITION | RECORD TERMINATING POSITION |
|---|---|---|
| 1 | (00'00") | (08'37") |
| 2 | (08'40") | (23'12") |
| 3 | (23'16") | (39'41") |
| 4 | (39'48") | (55'30") |

When another music program M2' is recorded over a second music program M2 from the starting position thereof as shown in Fig. 6(b), if the program M2' is shorter than the program M2, the latter part of the program M2 will remain between the program M2' and a third program M3. Since this remaining part is generally unnecessary, the renewal of the supplemental data in the TOC area, which follows the recording of the program M2', can be accomplished only by changing the record starting position and record terminating position of the program (Program No. 2) as shown in Table 2.

**TABLE 2**

| PROGRAM NO. | RECORD STARTING POSITION | RECORD TERMINATING POSITION |
|---|---|---|
| 1 | (00'00") | (08'37") |
| 2 | (08'40") | (14'56") |
| 3 | (23'16") | (39'41") |
| 4 | (39'48") | (55'30") |

On the other hand, if the program M2' is longer than the program M2, the latter part of the third program M3 will remain, as shown in Fig. 6(c), between the program M2' and a fourth program M4. If the remaining part is unnecessary like the foregoing case, not only the record starting position and record terminating position of the program (Program No. 2) but also the program number is required to be changed at the time of the renewal of the supplemental data stored in the TOC area as shown in Table 3.

**TABLE 3**

| PROGRAM NO. | RECORD STARTING POSITION | RECORD TERMINATING POSITION |
|---|---|---|
| 1 | (00'00") | (08'37") |
| 2 | (08'40") | (32'09") |
| 3 | (39'48") | (55'30") |

If the renewal of the supplemental data involves the change of the program numbers as described above, all the supplemental data stored in the TOC area have to be changed in an extreme case. Particularly, in the case there are many music programs stored, it will take a long time to renew the data, which causes an inconvenience for the user.

Furthermore, if the remaining part of the program M3 and the following program are not necessary in the case of Fig. 6(c), the information recording and retrieval system has to access the record terminating position of the program M2' (i.e. the record terminating position (32'09") of the program (Program No. 2) in Table 3) when starting the next recording operation. In this case, if the user once takes out the disk from the system, it gives rise to such a nuisance that the user has to memorize or write down the recording status of the last program, or play back the last program to check the recording status at the time of mounting the disk again.

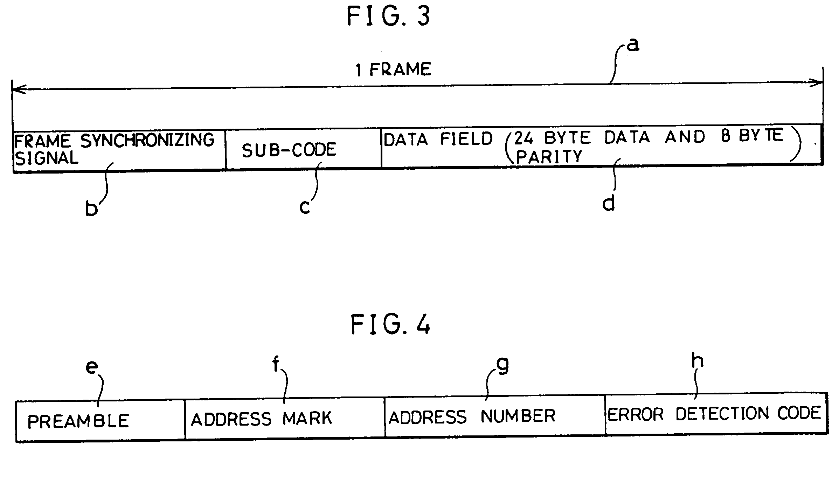

When the same signal format as those of CDs is employed in the information recording and retrieval system in order for the system to be compatible with CDs for playback use only as mentioned above, one frame of information a to be stored in the information recording area or the TOC area is composed of, as shown in Fig. 3, a data field d for storing 24 bytes of information such as a part of program and 8 bytes of parity used for error detection and error correction; a sub-code c comprising the identification number and time data of each program, etc.; and a frame synchronizing signal b for indicating the leading end of the frame.

The information stored in the data field d has high reliability since error correction is possible at the time of playback, while errors in reading the sub-code c must be avoidable because they can be detected but not corrected. In order to reduce errors in read information from the TOC area where high reliability is required, the supplemental data are repeatedly recorded a plurality of times in the TOC area, and then thus recorded data are repeatedly read out at the time of playback.

There is, however, such a disadvantage in this method that time required for reading out the supplemental data from the TOC area becomes longer as the number of repetitive recordings is increased in order to improve the reliability. For instance, when one item of supplemental data is repeatedly recorded 10 times, the length of the track needed for about one rotation of the disk is required for recording the item on the disk. In this case, 6 seconds or a little more of read time is needed on assumption that the rotational speed of the disk is 460 rpm and the number of supplemental data items is 50, which is inconvenient for the user since waiting time becomes longer.

### SUMMARY OF THE INVENTION

The object of the present invention is to provide an information recording and retrieval apparatus capable of retrieving supplemental data from the TOC area without an error in a short time.

This invention, as defined by claim 1, provides apparatus for recording and playing back information programs on and from a rewritable recording disk having absolute addresses, the disk including an information recording area for storing the input information programs and a TOC area for storing supplemental data relating to the information programs stored in said information recording area, the apparatus comprising:
recording means operable to successively record the items of supplemental data in the TOC area, in such a way that each item is repeatedly recorded n times, where n represents an integer: n>1, each item comprising at least an identification number corresponding to a program stored in the information recording area and the storage location of the program according to the absolute addresses thereof; and
reading means operable to repeatedly read each item of supplemental data which has been repeatedly recorded in the TOC area, and to store the read item in memory means of the apparatus;
characterized by
said recording means being arranged to record the repeated recordings of each item of supplemental data, relating to one particular information program, in a track length which corresponds substantially to one rotation of the disk;
said reading means being arranged to perform the repeated read operations on each said item by reading different recordings of said item until the item has been read out without an error (n - α) times, where α represents a positive integer: α<n, such an item being read at least once at the time the recording disk is mounted in the apparatus; and by
access means operable to access the storage location of the item of supplemental data to which the next identification number is assigned when the previous item has been read out without an error as aforesaid, wherein the access to that next item is performed by a track jump operation.

The features of the preamble of claim 1 are known in combination from EP-A-0 292 917.

In an embodiment of an apparatus according to this invention, when retrieving the supplemental data which have been repeatedly recorded a plurality of times in the TOC area, at the time each item of supplemental data is read without an error, the read data are judged to be effective and can be immediately stored in the memory means. After that, the apparatus accesses the storage location of supplemental data to which the next identification number is assigned, by performing a track jump operation. Therefore, there is no need to read each item the same number of times as that of the recording operations. This reduces the number of times each item of supplemental data is repeatedly read, when retrieving the data stored in the TOC area. Moreover, the arrangement in which each item of supplemental data is repeatedly recorded and the performance of the track jump operation further speed up the retrieval of TOC data, since once one item has been read without error, the next item can be very readily located.

In one embodiment:
said recording means is operable to record updated supplemental data in the TOC area by repeating a recording cycle a plurality of times, the recording cycle being a process in which each item of supplemental data stored in the memory means is repeatedly recorded in the TOC area (n - β) times, where β represents a positive integer: β<n.

In a recording and retrieval apparatus according to this embodiment, wherein supplemental data are repeatedly recorded a plurality of times, e.g. n times (n represents an integer : n>1) in the TOC area, when supplemental data recorded in the TOC area are stored in the memory means and then the data are stored back to the TOC area to replace the previous data in the TOC area, the number of repetitive recordings is reduced to (n - β) times (β represents a positive integer : β<n) and a recording cycle, in which each item of supplemental data is repeatedly recorded (n - β) times, is repeated a plurality of times. With this arrangement, the number of times each item of supplemental data is repeatedly read is reduced to (n - β) times when retrieving data from the TOC area after the restoring. In case the supplemental data cannot be retrieved without an error after completion of (n - β) times of readings, the next recording cycle may be started to execute another (n - β) times of readings on each item of supplemental data.

This embodiment thus provides an information recording and retrieval apparatus capable of retrieving supplemental data from the TOC area without an error in a short time, by reducing the number of times each item of supplemental data is repeatedly recorded in the TOC area thereby to reduce the number of repetitive readings thereof.

According to another embodiment, the recording means is operable to record onto the TOC area of a said recording disk whose information recording area already carries one or more said programs, new supplemental data for a program newly recorded, at a position in said TOC area following the supplemental data or sequence thereof relating to the already recorded information program or programs, and the reading means is operable to read and store in the memory means (11) the supplemental data recorded in the TOC area, the apparatus further comprising:
edit control means (6) for (a) preforming an edit control consisting of the steps of (i) judging from the items of supplemental data stored in the memory means whether a program in the information recording area overlaps one or more previously recorded programs, (ii) selecting the item of supplemental data corresponding only to the newly recorded one of the overlapped programs if it is judged that a program is recorded over one or more others and (iii) assigning new identification numbers to the new group of supplemental data items which includes the thus selected data item and omits the non-selected data item or items, and for (b) permitting the memory means to store the new group of supplemental data after the editing operation, and the recording means to record the new group of supplemental data in the TOC area.

According to this other embodiment, when a new program is additionally recorded in the information recording area of a disk where different programs have been already recorded, only supplemental data on the new program are stored, by means of the recording means, at the end of the sequence of supplemental data items in the TOC area, thereby minimizing the amount of information to be renewed in the TOC area.

When a new program is recorded over a previously recorded program in the information recording area, supplemental data both on the previously recorded program and the newly recorded program co-exist at the time the data recorded in the TOC area are stored in the memory means when the disk is mounted in the apparatus after the additional recording. However, only the supplemental data item corresponding to the newly recorded program (i.e. the posterior supplemental data in the TOC area) is selected from these co-existing items, and restored in the memory means. This permits the recording and retrieval apparatus to accurately access each program in the information recording area at high speed with the use of thus edited supplemental data items.

Also, the supplemental data stored in the memory means before the edit operation can be effectively utilized as information showing the progress of records to the information recording area.

This other embodiment thus provides an information recording and retrieval apparatus capable of minimizing the amount of information to be renewed in the TOC area when additionally recording a new program in the information recording area of a disk in which different programs have been already recorded.

The above rewritable recording disk may be one in which information is recorded or erased by utilizing magneto-optical effect, phase transition or the like. This rewritable disk may be a magneto-optical disk having the same format as those of CDs.

The above programs to be stored in the information recording area may be music programs, image data, data for various types of computers or similar information.

The above supplemental data may include information on the programs stored in the information recording area such as recording lengths, silence damping and fade-in/fade-out, and information on procedures for continuously playing back a plurality of specified programs, etc. in addition to information on the identification numbers and the record starting/terminating positions of the programs.

For a fuller understanding of the nature and advantages of the invention, reference should be made to the ensuing detailed description taken in conjunction with the accompanying drawings.

### BRIEF DESCRIPTION OF THE DRAWINGS

Fig. 1 is a block diagram showing the structure of a disk information recording and retrieval system.
Fig. 2 is a schematic plan view of a magneto-optical disk.
Fig. 3 is a diagram showing the format of a magneto-optical signal.
Fig. 4 is a diagram showing the format of signals which give information on absolute addresses.
Fig. 5 is a flow chart showing the procedure of retrieving information stored in a TOC area.
Fig. 6 is a diagram showing one example of the recording condition of music programs in a program area.

### DETAILED DESCRIPTION OF THE EMBODIMENT

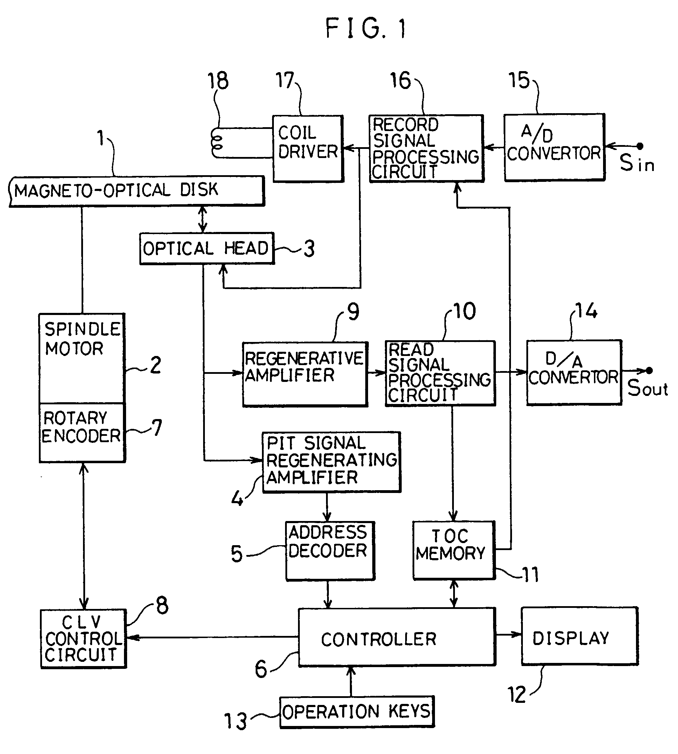

Referring now to Figs. 1 through 6, one embodiment of the present invention will be described hereinbelow.

The disk information recording and retrieval system in this embodiment is used for a magneto-optical disk and designed to record and play back music programs which are respectively converted into a data format standardized for CDs.

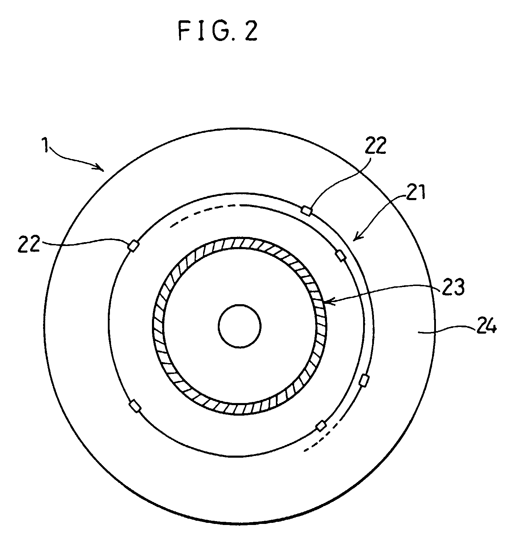

As shown in Fig. 2, a magneto-optical disk 1 functioning as a rewritable recording medium comprises at the transparent substrate thereof, a spiral track 21 e.g. in the form of a groove and pit-shaped absolute addresses 22 which are formed on the track 21.

On the transparent substrate is formed a magneto-optical recording layer. The magneto-optical recording layer is divided into a program area 24 which is an information recording area for storing programs as information, and a TOC area 23 located at the innermost part of the track 21, for storing supplemental data on programs to be stored in the program area 24. The supplemental data at least comprise program numbers which are the identification numbers of the programs stored in the program area 24, and the record starting positions and record terminating positions thereof, these positions corresponding to the absolute address 22 of each program.

The data format of conventional CDs for playback use only can be used for information to be stored in the program area 24 and the TOC area 23. More specifically, one frame of information a, as shown in Fig. 3, consists of a frame synchronizing signal b; a data field d comprising 24 bytes of data such as a part of a music program and 8 bytes of parity used for error detection and error correction; and a sub-code c comprising the identification number and time data etc. of a program. In the program area 24 and the TOC area 23, such frames of information a are to be successively stored. As to the frame of information a stored in the program area 24, the sub code c is not used usually, and therefore the contents thereof can be arbitrarily set.

The absolute address 22 comprises, as shown in Fig. 4, a preamble e used for synchronous control in reading operation; an address mark f for indicating the leading end of the absolute address 22; an address number g for indicating an address (this address corresponds to absolute time measured in sec.), the addresses being successively incremented by one outwardly from the inner part of the magneto-optical disk 1; and an error detection code h for detecting an error when detecting the address number g. The spacing between each absolute address 22 is set such that one absolute address is read every one sec. under the condition that the magneto-optical disk 1 is scanned at a constant linear velocity at the time of playback.

Fig. 1 shows one example of a disk information recording and retrieval system for recording and playing back information on and from the above magneto-optical disk 1.

The magneto-optical disk 1 is rotatively driven by a spindle motor 2 and one face thereof opposes an optical head 3 which projects a light beam on the magneto-optical disk 1 in order to record and play back information. The optical head 3 and a magnetic coil 18 (described later) function as the recording means.

Of information read out by the optical head 3 at the time of playback, the signal (hereinafter referred to as "pit signal") elements corresponding to the unevenness of the absolute address 22 are amplified by a pit signal regenerating amplifier 4. The amplified pit signal elements are sent to an address decoder 5, where the value of the absolute address 22 is recognized, and then sent to a controller 6 which controls the overall operations of the disk information recording and retrieval system. This controller 6 functions as the edit control means.

In accordance with the rotations of the spindle motor 2, a rotary encoder 7 disposed at the spindle motor 2 sends a predetermined number of pulses per one rotation to a CLV control circuit 8.

While detecting the rotational speed of the spindle motor 2 with the rotary encoder 7, the CLV control circuit 8 controls the rotational speed of the spindle motor 2 in order that the linear velocity of the magneto-optical disk 1 relative to the optical head 3 (i.e. the traveling speed of the optical head 3 which scans the track 21) is constant, according to the information on the position of the optical head 3 in a radial direction of the disk 1, the information being sent from the controller 6.

Of the information read out by the optical head 3, signal elements corresponding to information such as music programs, which are obtained by magneto-optical effect are amplified by a regenerative amplifier 9 and then sent to a read signal processing circuit 10. The read signal processing circuit 10 processes read information having a data format shown in Fig. 3 such as music programs, and extracts necessary information items so as to be arranged in a sequence, and corrects errors if any.

Of the information items processed by the read signal processing circuit 10, supplemental data recorded in the TOC area 23 are stored in a TOC memory 11 which functions as the memory means. The supplemental data stored in the TOC memory 11 are read by the controller 6 if necessary and displayed on a display 12 which serves as the display means. Various operations are instructed by the actuation of operation keys 13 by the user and those instructions are read by the controller 6.

The sequence of digital data from the read signal processing circuit 10 is converted into analog signals by a D/A convertor 14 and released outside as analog signals Sₒᵤₜ.

On the other hand, a program input from outside the system as analog signals Sᵢₙ is converted into digital signals by an A/D convertor 15 and sent to a record signal processing circuit 16.

The record signal processing circuit 16 generates record signals by converting the music program from the A/D convertor 15 or supplemental data from the TOC memory 11 into a digital format shown in Fig. 3. A coil driver 17 drives, in accordance with the record signals, the magnetic coil 18 to apply an external magnetic field onto the magneto-optical disk 1, the external magnetic field corresponding to the record signals from the record signal processing circuit 16.

The following description describes the operation of the disk information recording and retrieval system.

When the magneto-optical disk 1 is mounted on the spindle motor 2, the controller 6 controls an optical head moving mechanism (not shown) so that the optical head 3 is moved in a radial direction of the disk 1 to reach the TOC area 23, while feeding information on the optical head position back to the CLV control circuit 8. This information shows the position of the optical head 3 in the radial direction of the disk 1.

The CLV control circuit 8 calculates, on the basis of the information on the optical head position fed from the controller 6, the rotational speed of the spindle motor 2 required for rotating the disk with specified linear velocity in the radial position; and controls the spindle motor 2 such that the actual rotational speed thereof, obtained from the number of output pulses of the rotary encoder 7, coincides with the above required rotational speed, thereby rotatively driving the magneto-optical disk 1 at the specified linear velocity.

As the magneto-optical disk 1 rotates, the absolute address 22 is read by the optical head 3 to release read signals and these read signals are amplified by the pit signal regenerating amplifier 4. Thereafter, the value of the absolute address 22 is recognized by the address decoder 5 and then entered to the controller 6.

In the control of the rotation of the spindle motor 2 as described above, which is performed in order to make the linear velocity of the magneto-optical disk 1 relative to the optical head 3 constant, it is quite difficult to accurately obtain a specified linear velocity, because the information on optical head position is not necessarily coincident with the actual position of the optical head 3 due to variations in the machine accuracy. Therefore, as far as the absolute address 22 can be read and recognized, an error in the linear velocity is allowable to some extent.

In accordance with the value of the absolute address 22 from the address decoder 5, the controller 6 successively issues accurate information on optical head position to the CLV control circuit 8. Hence, the linear velocity is accurately controlled after that, irrespective of the presence of the read signal.

The following description describes the recording of music programs.

A music program input from outside the system taking the form of the analog signals Sᵢₙ is converted into digital signals by the A/D convertor 15 and then converted into the aforesaid specified format by the record signal processing circuit 16, thereby generating record signals. Based on the record signals, the coil driver 17 drives the magnetic coil 18 so as to apply a magnetic field, which corresponds to the input program, to the magneto-optical disk 1.

At the same time, a light beam having comparatively high output is projected from the optical head 3 onto the magneto-optical disk 1. The temperature of the magneto-optical disk 1 is locally risen by the irradiation of the light beam and coercive force drops at the heated areas. At the areas where coercive force is decreased, the direction of magnetization is reversed by the magnetic field of the magnetic coil 18, thereby recording the music program. This method is generally called "Magnetic Field Modulation Method" and enables overwriting in areas where information has been already stored.

When playing back the music program stored in the program area 24, polarization elements corresponding to the direction of magnetization of magneto-optical signals read out from the rotating magneto-optical disk 1 are detected by the optical head 3 and amplified by the regenerative amplifier 9, and then converted to digital signals by the read signal processing circuit 10, as already known by one skilled in the art. These digital signals are converted to analog signals by the D/A convertor 14 so as to be released as the analog output signals Sₒᵤₜ.

The following description describes the recording of information to the TOC area 23 on the magneto-optical disk 1.

As described earlier, the TOC area 23 stores the items of supplemental data each composed of at least a program number corresponding to a music program stored in the program area 24 and the record starting position and record terminating position of the music program, these positions respectively having a corresponding absolute address 22.

In this embodiment, when music programs M1 to M4 shown in Fig. 6(a) are originally recorded in the program area 24 for example, supplemental data shown in Table 1 are recorded in the TOC area 23. In this case, in consideration of the possibility that an error might occur at the time of retrieving the data stored in the TOC area 23, each item of supplemental data is repeatedly recorded n times (i.e. a specified plural number of times) in the TOC area 23. Therefore, in the case the number of repetitive recordings n is 10, the occurrence of an error may be allowed up to 9 times in the reading.

Table 4 shows the records in the TOC area 23 when the number of repetitive recordings is 10.

**TABLE 4**

| BLOCK NO. | PROGRAM NO. | RECORD STARTING POSITION | RECORD TERMINATING POSITION |
|---|---|---|---|
| 1 | 1 | (00'00") | (08'37") |
| 2 | 1 | (00'00") | (08'37") |
| | ∫ | ∫ | ∫ |
| 9 | 1 | (00'00") | (08'37") |
| 10 | 1 | (00'00") | (08'37") |
| 11 | 2 | (08'40") | (23'12") |
| 12 | 2 | (08'40") | (23'12") |
| | ∫ | ∫ | ∫ |
| 19 | 2 | (08'40") | (23'12") |
| 20 | 2 | (08'40") | (23'12") |
| 21 | 3 | (23'16") | (39'41") |
| 22 | 3 | (23'16") | (39'41") |
| | ∫ | ∫ | ∫ |
| 29 | 3 | (23'16") | (39'41") |
| 30 | 3 | (23'16") | (39'41") |
| 31 | 4 | (39'48") | (55'30") |
| 32 | 4 | (39'48") | (55'30") |
| | ∫ | ∫ | ∫ |
| 39 | 4 | (39'48") | (55'30") |
| 40 | 4 | (39'48") | (55'30") |

As apparent from Table 4, the record starting position and record terminating position of a music program (Program No. 1) are repeatedly stored in blocks (Block Nos. 1 to 10) and those of a music program (Program No. 2) are in blocks (Block Nos. 11 to 20). Likewise, the record starting position and record terminating position of a music program (Program No. 3) are repeatedly stored in blocks (Block Nos. 21 to 30) and those of a music program (Program No. 4) are in blocks (Block Nos. 31 to 40).

Next, the retrieval of supplemental data stored in the TOC area 23 will be explained.

As described earlier, when the magneto-optical disk 1 is mounted on the spindle motor 2, the controller 6 is actuated so that the optical head 3 moves to the TOC area 23 while the magneto-optical disk 1 is rotated at a specified constant linear velocity, thereby reading information stored in the TOC area 23. If there is information stored in the TOC area 23, the information is stored in the TOC memory 11.

Since the format of the supplemental data in the TOC area 23 is the same as those of conventional CDs, an error can be detected in reading every block shown in Table 4. In this example, once each item of supplemental data in the TOC area 23 is read without an error, the read item is stored in the TOC memory and the reading operation performed on the item is completed.

If an error occurs in reading the item, the reading of the item is performed repeatedly until the item is read without an error. After the item is read without an error and stored in the TOC memory 11, the optical head 3 immediately accesses the storage location of an item of supplemental data which corresponds to the next program, and the next item is thus read out.

Now, suppose the contents of Table 1 is stored in the TOC area 23.

The record starting position and record terminating position of each program shown in Table 1 respectively correspond to the time data indicated by the absolute address 22. The contents of the information as shown in Table 1, which are read out from the TOC area 23 and stored in the TOC memory 11, are displayed on the display 12 by means of the controller 6. This allows the user to visually inspect each program stored in the magneto-optical disk 1. If the user wants to play back the second music program and instructs it by operating the operation keys 13, the controller 6 controls the optical head 3 to access the record starting position of the second music program (i.e. the absolute address of 08′40˝). The selection of a music program is thus performed.

In the course of the playback of a music program, the relative time of the program (the time elapsed since the instant the playback of the program begins) is displayed on the display 12 together with the Program Number. This relative time is obtained by subtracting the value of the absolute address 22 of the record starting position from that of the absolute address 22 being currently read out. It is also possible to indicate a particular position in the program upon which a playback operation is currently performed, by the absolute address 22. As described above, by utilizing the contents of the TOC memory 11 and the absolute addresses 22 which are read one after another, the display of necessary information and the access operation by the optical head 3 can be performed, without the use of the data of the sub-code c in the program area 24.

The renewal of the data in the TOC area 23 of the magneto-optical disk 1 will be hereinafter described.

For example, when the music programs shown in Fig. 6(a) are originally recorded in the magneto-optical disk 1 in which no program has been stored, the contents shown in Table 1 are recorded in the TOC area 23 as supplemental data.

On the other hand, when a new music program is additionally recorded in the magneto-optical disk 1 in which programs have been already stored, the recording of supplemental data to the TOC area 23 is performed as follows.

With the use of the magneto-optical disk 1 in which music programs shown in Fig. 6(a) and Table 1 are already recorded, music program M2' is written over a music program M2 starting from its record starting position. The resultant supplemental data are as shown in Table 5. In this case, the recording is repeated a specified number of times n. For example, the supplemental data are repeatedly recorded 10 times.

**TABLE 5**

| PROGRAM NO. | RECORD STARTING POSITION | RECORD TERMINATING POSITION |
|---|---|---|
| 1 | (00'00") | (08'37") |
| 2 | (08'40") | (23'12") |
| 3 | (23'16") | (39'41") |
| 4 | (39'48") | (55'30") |
| 5 | (08'40") | (32'09") |

As apparent from the comparison between Table 5 and Table 1, the supplemental data on the music programs having Program Nos. 1 to 4 after the additional recording of the music program M2′ are the same as those before the additional recording. The supplemental data on the music program which has been additionally recorded is stored with Program No. 5 in the end of the sequence of the data. That is, only the supplemental data on the program having Program No. 5, which has been additionally recorded in the program area 24, is recorded in a short time, at the time of the renewal of data in the TOC area 23.

The data in the TOC area 23 after the additional recording is retrieved and memorized by the TOC memory 11 when the magneto-optical disk 1 is mounted on the spindle motor 2 again. At that time, the following procedures are performed by the controller 6.

The controller 6 compares all the items of supplemental data stored in the TOC memory 11 and rearranges the items in a sequence in such a way that an item, which corresponds to the program having the record starting position in a lower absolute address, is in an anterior position. In this case, if it is judged that another music program is stored over a previously stored music program in the program area 24, of the two corresponding items of supplemental data in the TOC area 23, the posterior item (i.e. the item having a larger Program No.) is stored in the TOC memory 11 and the other is deleted.

Thereafter, new Program Numbers are assigned to the supplemental data thus edited (i.e. the items of supplemental data resulted from the above editing operation) in such a way that the item of supplemental data on a music program, whose record starting position is located in a lower absolute address, has a smaller Program Number.

In the case of Table 5, it is judged from the supplemental data that the music programs having Program Nos. 1 to 4 are successively stored and their record starting positions do not overlap one another. Therefore, the items of supplemental data corresponding to the music programs (Program Nos. 1 to 4) are not changed. On the other hand, the time elapsed from the record starting position (08′40˝) of the music program (Program No. 5) until the record terminating position (32′09˝) thereof includes the record starting position and record terminating position of the program (Program No. 2) and the record starting position of the music program (Program No. 3). Therefore, while the supplemental data corresponding to the music program (Program No. 5) are stored, the supplemental data corresponding to the music programs (Program Nos. 2 and 3) are deleted.

Thereafter, new Program Numbers are assigned to the above edited items in such a way an item corresponding to the music program, whose record starting position is located in a lower absolute address, has a smaller Program Number. The resultant supplemental data after the editing operation are as shown in Table 6.

**TABLE 6**

| PROGRAM NO. | RECORD STARTING POSITION | RECORD TERMINATING POSITION |
|---|---|---|
| 1 | (00'00") | (08'37") |
| 2 | (08'40") | (32'09") |
| 3 | (39'48") | (55'30") |

The items of supplemental data after the editing operation as shown in Table 6 are stored in the TOC memory 11. The TOC memory 11 also keeps the previous items of supplemental data before the editing operation.

In the playback of music programs which is subsequently performed, according to the edited supplemental data stored in the TOC memory 11, the Program Numbers and time data etc. are displayed and the access operation based on the program selection is performed as described earlier.

On the other hand, the supplemental data stored in the TOC memory 11 before the editing operation, (i.e. the supplemental data as read out from the TOC area 23) are displayed on the display 12, thereby to effectively utilize the data as information showing the progress of the recording of programs to the magneto-optical disk 1.

As described above, only the supplemental data on a program, which have been newly recorded in the program area 24, are additionally recorded in the TOC area 23, whereby the amount of data to be renewed in the TOC area 23 can be minimized and the additional recording to the TOC area 23 can be performed in a short time.

In this embodiment, the disk information recording and retrieval system may be designed to perform the following operation by the user's instruction.

When the user intends to record a new music program in a position subsequent to the record terminating position of the last recorded music program, he instructs to do so. In compliance with the instruction, the controller 6 controls the optical head 3 to access to the record terminating position of the last recorded music program (i.e. the music program corresponding to the item of supplemental data located in the end of the sequence of data in the TOC memory 11 before the editing operation), and halt the rotation of the disk 1 to set the optical head 3 in a standby state at the position. This enables the system to readily start the recording of a new music program in a position subsequent to the last recorded music program.

Taking the case of Fig. 6(c) for example, when a new program is recorded in the subsequent position to the record terminating position of the music program M2′ nullifying the music programs M3 and M4, the supplemental data which have Program No. 5 and are located in the end of the sequence of data shown in Table 5, are firstly referred. Thereafter, the optical head 3 accesses to the record terminating position (32′09˝) of the program (Program No. 5) and is held in a standby state at the position. This facilitates the operation for recording the third and later music programs. The setting of the optical head 3 in a standby state (generally called "Still Mode") is easily achieved by a track jump executed each time the disk 1 is rotated. This method is generally used in conventional CDs and therefore the detailed description thereof will be omitted.

As described above, the renewal of data in the TOC area 23 is generally accomplished by additionally recording only the supplemental data, which correspond to the newly recorded music program, in the end of the sequence of data in the TOC area 23 when a new program is additionally recorded. However, it is also possible that the supplemental data stored in the TOC memory 11 after the editing operation may be stored in the TOC area 23 to replace the data therein, after the data in the TOC memory 11 are converted to a specified format in the record signal processing circuit 16. Such recording is performed on the following occasions: upon completion of the recording of a program; at the time of dismounting the magneto-optical disk 1 from the spindle motor 2; or at the time the user instructs with operation keys 13 on his judgement.

According to the format of CDs, time required for reading information in one block is (1/75) sec. When an item of supplemental data is repeatedly recorded 10 times (i.e. recorded in 10 blocks) like the foregoing case, the read time per item is (10/75) sec. In this case, if the linear velocity of the disk 1 is 1.2m/s, the length of the the track occupied by the 10 blocks on the disk 1 is: 1.2 x (10/75) = 0.16 m. If the TOC area 23 is located approximately 25 mm away from the centre of the disk 1 in a radial direction, the circumferential length of the TOC area 23 is 2 x π x (25 x 10⁻³) ≒ 0.157 m. It is found from the above calculation that supplemental data on one music program occupy the track whose length is substantially equal to the distance the optical head 3 scans when the disk 1 is rotated once.

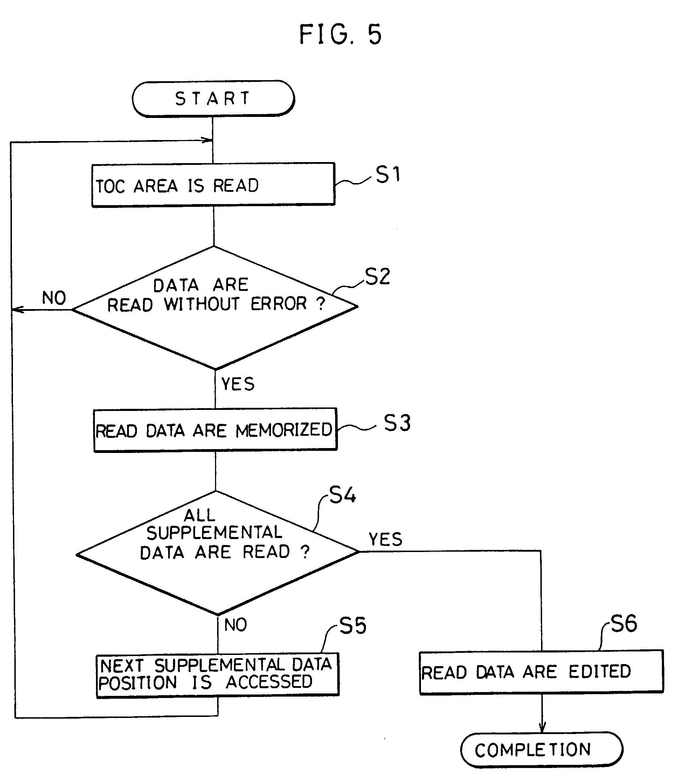

Now, reference is made to the flow chart of Fig. 5 to explain the procedures for retrieving data stored in the TOC area 23.

When the reading of an item of supplemental data in the TOC area 23 is started at step 1 (hereinafter step is referred to "S"), the presence/absence of an error in the read data is detected in the read signal processing circuit 10 (S2). If an error is detected in the read data, the program returns to S1 to start the reading of the same data from the next block and the reading is repeated until the data are read without an error. On the other hand, if no error is detected at S2, the read data are stored in the TOC memory 11 (S3).

Thereafter, it is judged whether the retrieval of supplemental data on all the programs is completed (S4). This judgement is performed by the controller 6 by detecting the absolute address 22 which indicates the end of the sequence of the supplemental data in the TOC area 23.

When the retrieval of supplemental data on all the programs is not completed yet, the optical head 3 accesses to the record starting position of an item of supplemental data having the next Program Number (S5) and the same reading process from S1 onward is performed on the supplemental data having the next Program Number. The above access to the record starting position of the next item of the supplemental data can be easily achieved, as described earlier, by making the optical head 3 jump to an adjacent track, since the length of the 10 blocks each storing supplemental data on a music program, substantially correspond to one rotation of the disk 1.

This Track Jump Method is used in a conventional CD player and known to the skilled in the art, and therefore the detailed explanation thereof is omitted.

If the retrieval of supplemental data on all the program is completed at S4, the items of supplemental data in the TOC memory 11 are edited with the foregoing method and the edited data are stored in the TOC memory 11 (S6).

The above retrieving process will be explained with reference to Table 4 as modified according to Table 5. The supplemental data on the program (Program No. 1) stored in the block (Block No. 1) are read and if no error occurs, the read data are stored in the TOC memory 11. Thereafter, the supplemental data on the program (Program No. 2) in the block (Block No. 12) are read. Likewise, the supplemental data in the blocks (Block Nos. 23, 34 and 45) are read successively and stored in the TOC memory 11 if no error occurs.

If an error occurs in the reading, the same item of data is repeatedly read from the next block onward until the item is read without an error. For example, in case an error occurs in reading the supplemental data stored in the block (Block No. 23), the same data stored in the block (Block No. 24) may be subsequently read. In case an error occurs in reading the supplemental data stored in the block (Block No. 30), the same data in the block (Block No. 21) are read by Block Jump Method. Thus, the reading operation can be performed on supplemental data on any music program up to 10 times.

Taking the case of Table 4 for example, since the number of programs is 5, the reading operation may be performed on 5 blocks at least. Therefore, on assumption that time required for reading 1 block is necessary to carry out a block jump, time required for reading the TOC area 23 is (1/75) sec. x 2 x 5 = (10/75) sec. To make a comparison with a conventional case where it takes (1/75) sec. x 10 x 5 = (50/75) sec. to read all the blocks, the read time can be saved to a considerable extent.

In the foregoing embodiment, since the length of the supplemental data on one music program recorded on the disk 1 substantially corresponds to one rotation of the disk 1, Track Jump Method is utilized in the access to each item of data.

Furthermore, in this embodiment, once supplemental data on one music program are read out without an error, the read data are stored in the TOC memory 11, but it is also possible that the TOC memory 11 stores the read data, when the data are read without an error a predetermined number of times (more than two times and less than n times).

With the above arrangement, an increase in the read time of the TOC area 23 resulting from the increased number of repetitive recordings can be avoided.

Next, the restoring of supplemental data will be explained. As already explained, the restoring of supplemental data is performed in response to the user's instruction, or automatically performed in the case the TOC area 23 becomes full.

Concretely, the edited items of supplemental data as shown in Table 6 (these items include only supplemental data on necessary programs), which have been stored in the TOC memory 11, are restored in the TOC area 23. At that time, the number of repetitive recordings is less than the number of repetitive recordings n at the time of initially recording, that is, (n - β) times (β represents a positive integer : β<n). A recording cycle, in which each item of supplemental data is repeatedly recorded (n - β) times in the TOC area 23, is repeated a plurality of times.

For example, when n = 10 (times) and β = 7, the number of times of repetitive recordings is 3 at the time of restoring. The contents of the record in this case is shown in Table. 7.

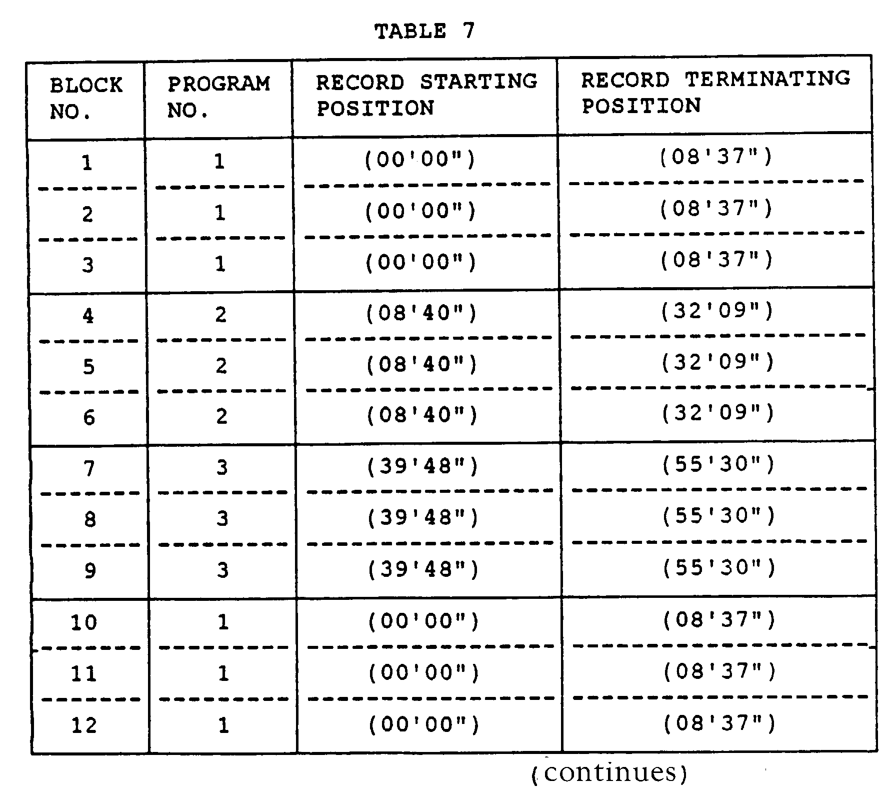

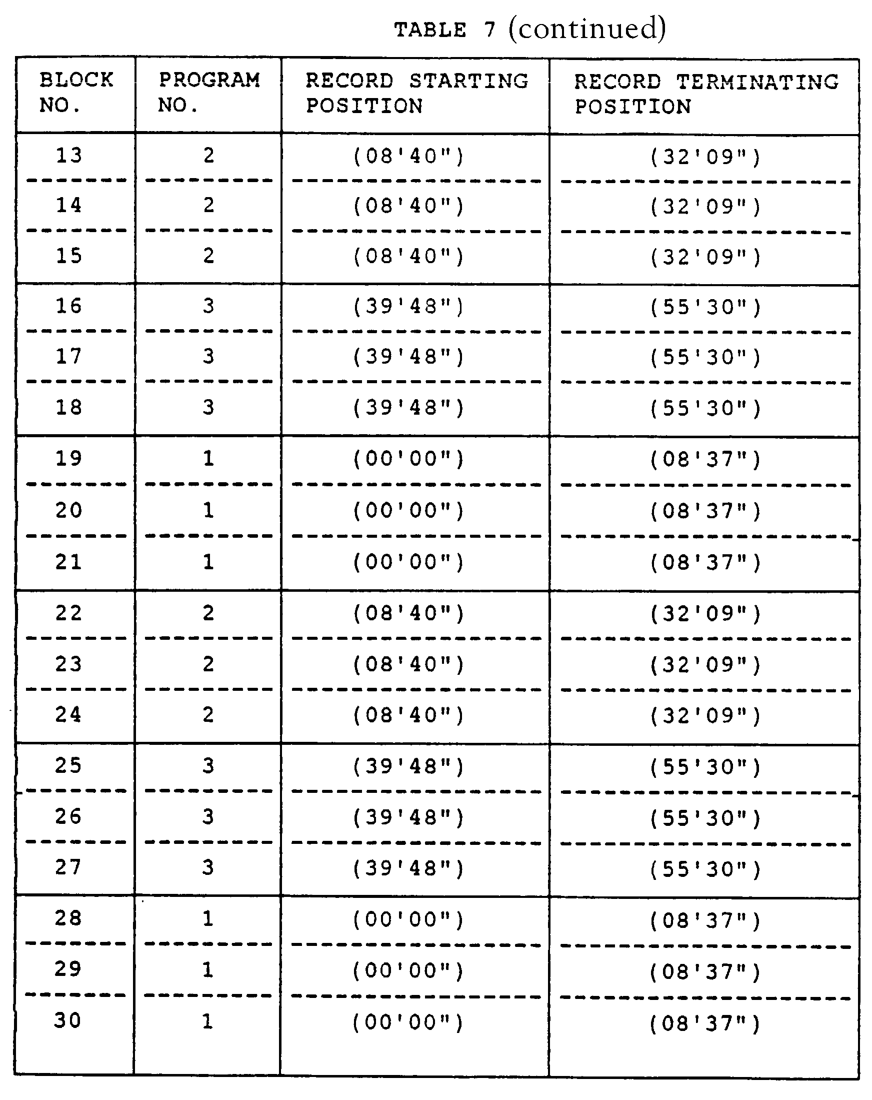

As shown in Fig. 7, supplemental data on the program (Program No. 1) are stored in the blocks (Block Nos. 1 to 3); supplemental data on the program (Program No. 2) are stored in the blocks (Block Nos. 4 to 6); and supplemental data on the program (Program No. 3) are stored in the blocks (Block Nos. 7 to 9). One recording cycle is completed when the above data are stored in the corresponding blocks. This cycle, in which supplemental data on each program are recorded in three blocks, is repeated a plurality of times. The number of times the cycle is repeated is determined depending on the capacity of the TOC area 23.

When retrieving the information as shown in Table 7 from the TOC area 23 after restoring, the data in the first cycle, i.e., the data stored in the blocks (Block Nos. 1 to 9) are firstly read. In other words, each item of supplemental data is repeatedly read three times (this number of times is equal to that of repetitive recordings).

Compared with the number of times each item is initially recorded, the number of repetitive recordings is reduced at the time of restoring. This results in reducing the number of times each restored item is read, and therefore time required for reading the restored data can be saved.

If each item of all the supplemental data can be read without an error at least once when performing the first reading cycle, the reading of the TOC area 23 is immediately completed. On the other hand, if any one of the items cannot be read without an error, the next reading cycle is started. In the case of Table 7, the data in the blocks (Block Nos. 10 to 18) are read in the next cycle. This can be an offset to an error in the results of automatic processing.

In the above case, the edited items of supplemental data stored in the TOC memory 11 (these items include only effective supplemental data items in the TOC area 23) are recorded in the TOC area 23, but the supplemental data before editing (i.e. supplemental data on all the programs which have been recorded in the program area 24) may be restored in the TOC area 23 with the same method as above.

So far a disk information recording and retrieval system having the same format as those of conventional CDs, has been described in the foregoing embodiment, but the present invention is not limited to this. As far as the information recording and retrieval system is used for a rewritable disk having absolute addresses, a variety of formats may be employed.

Also, information to be recorded may be many kinds of data such as image data and data for various types of computers, in stead of music programs.

The supplemental data to be stored in the TOC area 23 may include information on programs such as record lengths, silence damping and fade-in/fade-out, and information on procedures for continuously playing back a plurality of specified programs etc., in addition to information on the identification numbers and record starting/terminating positions of programs.

As described above, an information recording and retrieval system according to the embodiment of the invention comprises:
(1) recording means for (a) successively recording the items of supplemental data in a TOC area in such a way that each item of supplemental data is repeatedly recorded n times (n represents an integer: n>1), and (b) recording supplemental data on an additionally recorded program at the end of the sequence of supplemental data items in the TOC area when a new program is additionally recorded in the information recording area of a recording medium where different information has been already stored, each item of supplemental data at least comprising an identification number corresponding to a program stored in the information recording area and the storage location of the program which corresponds to the absolute addresses thereof;
(2) memory means for storing each item of supplemental data which has been repeatedly recorded in the TOC area, when the item is read without an error (n - α) times (α represents a positive integer: α<n), such an item being read at least once at the time the recording medium is mounted in the system;
(3) access means for accessing to the storage location of an item of supplemental data to which the next identification number is assigned, when the read item is stored in the memory means;
(4) edit control means for (a) performing an edit control consisting of the steps of i) judging from the items of supplemental data stored in the memory means whether a program is recorded over another program in the information recording area, ii) selecting one as effective data from the items of supplemental data corresponding to the overlapped programs if it is judged that a program is recorded over another, the selected item being in a posterior position in the TOC area and iii) assigning new identification numbers to the new group of supplemental data items including thus selected item, in such a way that an item, which corresponds to a program having the record starting position in a lower absolute address, has a smaller identification number, and for (b) permitting the memory means to store the new group of supplemental data after the editing operation; and
(5) restoring means for repeating a recording cycle a plurality of times, the recording cycle being a process in which each item of supplemental data stored in the memory means is repeatedly recorded in the TOC area (n - β) times (β represents a positive integer: β<n).

In the above described system, when a new program is additionally recorded in the information recording area of a recording medium in which different programs have been already stored, only supplemental data on the additionally recorded program are recorded in the end of the sequence of supplemental data items stored in the TOC area by the recording means, so that the amount of supplemental data to be renewed in the TOC area as well as time required for the renewal can be reduced.

When a new program is recorded over another program stored in the information recording area, the supplemental data on the originally recorded program and one on the new program co-exist in an overlapped manner at the time the data in the TOC area are stored in the memory means after the recording medium is mounted again. Of these items of supplemental data, only the data item on the new program (i.e. the posterior item in the TOC area) is selected so as to be stored in the memory means. Therefore, the access to the programs in the information recording area can be accurately performed at high speed, by referring to the edited items of supplemental data.

The supplemental data stored in the memory means before the editing operation are also effectively utilized as information which shows the progress of records to the information recording area.

Furthermore, even though each item of supplemental data is repeatedly recorded n times in the TOC area, there is no need to read n pieces of data at the time of retrieving the item. Specifically, at the time each item is read without an error a specified number of times (this number of times is less than the number of times the item is recorded, i.e., (n - α) times), the read data item is stored in the memory means as effective data, and then the storage location of an item having the next identification number is accessed in order to be retrieved. This reduces the number of times each item is repeatedly read at the time of the retrieval of data stored in the TOC area, thereby reducing time required for reading the TOC area.

In the above system, when supplemental data are read out from the TOC area to be stored in the memory means and the supplemental data in the memory means are restored in the TOC area, the number of times each item is recorded is reduced to (n - β) times and a recording cycle in which each item is (n - β) times recorded is repeated a plurality of times. Therefore, the number of times the restored item is read is also reduced to (n - β) times, so that the read time is reduced at the time of retrieving the supplemental data from the TOC area after the restoring operation.

In the above case, if an item cannot be read out without an error by (n - β) times of readings, the next reading cycle is started in order that each item is further read (n - β) times.

In the foregoing embodiment, an information recording and retrieval system used for magneto-optical disks has been described, but it is also possible to employ rewritable disks other than the magneto-optical disks.

The absolute addresses are recorded in the form of pits in the embodiment, but it is also possible to adapt any other forms.

## Claims

1. Apparatus for recording and playing back information programs on and from a rewritable recording disk (1) having absolute addresses (22), the disk including an information recording area (24) for storing the input information programs and a TOC area (23) for storing supplemental data relating to the information programs stored in said information recording area, the apparatus comprising:
recording means operable to successively record the items of supplemental data in the TOC area, in such a way that each item is repeatedly recorded n times, where n represents an integer: n>1, each item comprising at least an identification number corresponding to a program stored in the information recording area and the storage location of the program according to the absolute addresses thereof; and
reading means operable to repeatedly read each item of supplemental data which has been repeatedly recorded in the TOC area, and to store the read item in memory means (11) of the apparatus;
characterized by
said recording means being arranged to record the repeated recordings of each item of supplemental data, relating to one particular information program, in a track length which corresponds substantially to one rotation of the disk;
said reading means being arranged to perform the repeated read operations on each said item by reading different recordings of said item until the item has been read out without an error n - α times, where α represents a positive integer: α<n, such an item being read at least once at the time the recording disk is mounted in the apparatus; and by
access means operable to access the storage location of the item of supplemental data to which the next identification number is assigned when the previous item has been read out without an error as aforesaid, wherein the access to that next item is performed by a track jump operation.

2. Apparatus according to claim 1, wherein:
said recording means is operable to record updated supplemental data in the TOC area by repeating a recording cycle a plurality of times, the recording cycle being a process in which each item of supplemental data stored in the memory means is repeatedly recorded in the TOC area n - β times, where β represents a positive integer: β<n.

3. Apparatus according to claim 1 or claim 2, wherein the recording means is operable to record onto the TOC area of a said recording disk whose information recording area already carries one or more said programs, new supplemental data for a program newly recorded, at a position in said TOC area following the supplemental data or sequence thereof relating to the already recorded information program or programs, and the reading means is operable to read and store in the memory means (11) the supplemental data recorded in the TOC area, the apparatus further comprising:
edit control means (6) for (a) preforming an edit control consisting of the steps of (i) judging from the items of supplemental data stored in the memory means whether a program in the information recording area overlaps one or more previously recorded programs, (ii) selecting the item of supplemental data corresponding only to the newly recorded one of the overlapped programs if it is judged that a program is recorded over one or more others and (iii) assigning new identification numbers to the new group of supplemental data items which includes the thus selected data item and omits the non-selected data item or items, and for (b) permitting the memory means to store the new group of supplemental data after the editing operation, and the recording means to record the new group of supplemental data in the TOC area.

4. Apparatus according to claim 3, wherein the assignment of new identification numbers to the new group of supplemental data by the edit control means (6) is in such a way that an item corresponding to a program whose record starting position is located in a lower address has a smaller identification number.

5. Apparatus according to any one of claims 1 to 4, adapted for use with a said recording disk on which said absolute addresses are formed so that the reflection factor of light, caused for example by phase transition, is changed thereat.

6. Apparatus according to any one of claims 1 to 4, adapted for use with a said recording disk in which information is recorded and erased by utilizing magneto-optical effect, phase transition, or the like.

7. Apparatus according to claim 6, adapted for use with a said recording disk which includes:
a spiral track (21) or concentric circular tracks;
absolute addresses (22) in the form of pits on the track or tracks;
an information recording area (24) for storing input programs formed within the outer part of the disk; and
a TOC area (23) for storing supplemental data on the programs recorded in the information recording area, formed within the innermost part of the disk.

8. Apparatus according to claim 6, wherein the spacing between the absolute addresses (22) of the disk is determined so that one address is read per second on condition that the disk is rotated at a specified linear velocity at the time of playback.

9. Apparatus according to claim 8, wherein each said absolute address (22) comprises:
a preamble used for synchronous control at the time of playback;
an address mark for indicating the leading end of the absolute address;
an address number for indicating an address which is successively incremented by one outwardly from the inner part of the rewritable disk; and
an error detection code for detecting an error when the address number is detected.

10. Apparatus according to claim 6, the apparatus being operable to record information in the information recording area and in the TOC area of the disk as frames of information, each frame comprising:
a frame synchronizing signal;
a data field comprising 24 bytes of data such as a part of a music program and 8 bytes of parity used for error detection; and
a sub-code including an identification number and the time data of the program.

11. Apparatus according to any one of claims 1 to 10, wherein said memory means includes a TOC memory (11) which is a read/write memory for storing data recorded in the TOC area of said recording disk.

12. Apparatus according to any one of claims 1 to 11, wherein said supplemental data include the identification numbers, record starting positions and record terminating positions of the programs recorded in the information recording area.

13. Apparatus according to any one of claims 1 to 11, wherein said supplemental data include information on the programs recorded in the information recording area such as identification numbers, record starting positions and record terminating positions, recording lengths, silence damping, fade-in/fade-out and information on procedures for continuously playing back a plurality of specified programs.

14. A method of processing data on a TOC area (23) of a rewritable recording disk (1) received in an information recording and playback apparatus, the method comprising the steps of:
recording in said TOC area (23) a plurality of items of supplemental data relating to respective information programs recorded in an information recording area (24) of the disk, each item of supplemental data being repeatedly recorded in a plurality of blocks so that the repeated recordings relating to one particular information program occupy a track length which corresponds substantially to one rotation of the disk;
starting to read the recorded supplemental data;
detecting the presence/absence of an error in reading an item from a block;
repeating the reading of the same item of supplemental data from the subsequent block until the item can be read without an error at least once, when an error is detected in the detecting step;
storing the read item in a TOC memory (11) of said apparatus, when the item is read without an error;
judging whether the retrieval of supplemental data on all the programs is completed; and
accessing to the storage location of the item of supplemental data relating to the next program for performing the next reading operation, when the retrieval of supplemental data on all the programs is not completed, wherein the accessing to that next item is performed by a track jump operation.

15. A method according to claim 14, further comprising the steps of:
editing the items of supplemental data stored in the TOC memory, when the retrieval of supplemental data on all the programs is completed; and
restoring the edited supplemental data in the TOC memory.

16. A method according to claim 15, further comprising the steps of:
performing, in respect of each item of supplemental data, one recording cycle corresponding to the recording step of claim 14; and
repeating each recording cycle a plurality of times.

17. A method according to claim 16, further comprising the steps of:
reading the item of supplemental data the same number of times as the number of repetitive recordings;
judging whether each item of all the supplemental data has been read without an error at least once;
terminating the reading operation if each item of supplemental data has been read without an error at least once; and
starting to read the items of supplemental data recorded in the next recording cycle, and repeatedly reading the items until each item of all the supplemental data is read at least once without an error, if any one of the supplemental data in the previous recording cycle has not been read without an error.

18. A method according to claim 15, wherein the editing step comprises the steps of:
comparing the items of said supplemental data following storage in a TOC memory (11) of the apparatus;
arranging the programs in a sequence in such a way that a program, whose record starting position is in a lower address is anteriorly placed, based on the record starting position and record terminating position of each program, the positions being obtained from the supplemental data;
judging whether a program is recorded over another program in the information recording area;
selecting one as effective data from the items of supplemental data corresponding to the overlapped programs and deleting the other, when it is judged that one program is recorded over another program, the selected item having been posteriorly placed in the TOC area; and
assigning new identification numbers to the new group of effective supplemental data items including the thus selected item, in such a way that an item on a program, whose record starting position is located in a lower absolute address, has a smaller identification number.

## Patentansprüche

1. Gerät zum Aufzeichnen und Abspielen von Informationsprogrammen auf bzw. von einer wiederbeschreibbaren Aufzeichnungsplatte (1) mit Absolutadressen (22), wobei die Platte einen Informationsaufzeichnungsbereich (24) zum Abspeichern der eingegebenen Informationsprogramme sowie einen TOC-Bereich (23) zum Abspeichern von Zusatzdaten betreffend die im Informationsaufzeichnungsbereich abgespeicherten Informationsprogramme enthält, mit:
- einer Aufzeichnungseinrichtung, die so betreibbar ist, daß sie aufeinanderfolgend die Zusatzdaten-Einzelinformationen im TOC-Bereich auf solche Weise aufzeichnet, daß jede Einzelinformation wiederholt n Mal aufgezeichnet wird, wobei n eine ganze Zahl repräsentiert: n > 1, wobei jede Einzelinformation mindestens eine Kennungsnummer, die einem im Informationsaufzeichnungsbereich abgespeicherten Programm entspricht, und den Speicherort des Programms entsprechend den Absolutadressen desselben enthält; und
- einer Leseeinrichtung, die so betreibbar ist, daß sie jede Zusatzdaten-Einzelinformation, die im TOC-Bereich wiederholt aufgezeichnet wurde, wiederholt liest und die gelesene Einzelinformation in eine Speichereinrichtung (11) des Geräts einspeichert;
**dadurch gekennzeichnet,** daß
- die Aufzeichnungseinrichtung so ausgebildet ist, daß sie die wiederholten Aufzeichnungen jeder Zusatzdaten-Einzelinformation, betreffend ein spezielles Informationsprogramm, über eine Spurlänge aufzeichnet, die im wesentlichen einer Plattenumdrehung entspricht;
- die Leseeinrichtung so ausgebildet ist, daß sie die wiederholten Lesevorgänge für jede Einzelinformation durch Lesen verschiedener Aufzeichnungen dieser Einzelinformation wiederholt, bis die Einzelinformation fehlerfrei n - α Mal ausgelesen wurde, wobei α eine positive ganze Zahl: α < n repräsentiert, wobei eine derartige Einzelinformation mindestens ein Mal gelesen wird, wenn die Aufzeichnungsplatte in das Gerät eingesetzt wird; und
- eine Zugriffseinrichtung vorhanden ist, die so betreibbar ist, daß sie auf den Speicherort der Zusatzdaten-Einzelinformation, der die nächste Kennungsnummer zugeordnet ist, zugreift, wenn die vorige Einzelinformation fehlerfrei, wie oben angegeben, ausgelesen wurde, wobei der Zugriff auf diese nächste Einzelinformation durch einen Spursprungvorgang ausgeführt wird.

2. Gerät nach Anspruch 1, bei dem
- die Aufzeichnungseinrichtung so betreibbar ist, daß sie aktualisierte Zusatzdaten dadurch im TOC-Bereich aufzeichnet, daß sie einen Aufzeichnungszyklus mehrmals wiederholt, wobei der Aufzeichnungszyklus ein Prozeß ist, bei dem jede in der Speichereinrichtung abgespeicherte Zusatzdaten-Einzelinformation wiederholt n - β Mal im TOC-Bereich aufgezeichnet wird, wobei β eine positive ganze Zahl ist: β < n.

3. Gerät nach Anspruch 1 oder Anspruch 2, bei dem die Aufzeichnungseinrichtung so betreibbar ist, daß sie im TOC-Bereich der Aufzeichnungsplatte, deren Informationsaufzeichnungsbereich bereits ein Programm oder mehrere enthält, neue Zusatzdaten für ein neu aufgezeichnetes Programm an einer Position in diesem TOC-Bereich aufzeichnet, die auf die Zusatzdaten oder eine Folge solcher Daten folgt, die das bereits aufgezeichnete Informationsprogramm oder die Programme betreffen, und die Leseeinrichtung so betreibbar ist, daß sie die im TOC-Bereich aufgezeichneten Zusatzdaten liest und in der Speichereinrichtung (11) abspeichert, wobei das Gerät ferner folgendes aufweist:
- eine Editiersteuereinrichtung (6) zum (a) Ausführen einer Editiersteuerung, die aus den folgenden Schritten besteht: (i) Beurteilen aus den in der Speichereinrichtung abgespeicherten Zusatzdaten-Einzelinformationen, ob ein Programm im Informationsaufzeichnungsbereich mit einem oder mehreren zuvor aufgezeichneten Programmen überlappt, (ii) Auswählen der Zusatzdaten-Einzelinformation, die nur dem neu aufgezeichneten Programm unter den überlappenden Programmen entspricht, wenn erkannt wird, daß ein Programm über einem oder mehreren anderen aufgezeichnet ist, und (iii) Zuordnen neuer Kennungsnummern zu neuen Gruppen von Zusatzdaten-Einzelinformationen, die die so ausgewählte Dateneinzelinformation enthält, und Weglassen der nicht ausgewählten Dateneinzelinformation oder -informationen; und zum (b) Ermöglichen, daß die Speichereinrichtung die neue Gruppe von Zusatzdaten nach dem Editiervorgang abspeichert und die Aufzeichnungseinrichtung die neue Gruppe von Zusatzdaten im TOC-Bereich aufzeichnet.

4. Gerät nach Anspruch 3, bei dem die Zuordnung neuer Kennungsnummern zur neuen Gruppe von Zusatzdaten durch die Editiersteuerung (6) auf solche Weise erfolgt, daß eine Einzelinformation, die einem Programm entspricht, dessen Aufzeichnungsstartposition an einer niedrigeren Adresse liegt, eine andere Kennungsnummer hat.

5. Gerät nach einem der Ansprüche 1 bis 4, das zur Verwendung mit einer Aufzeichnungsplatte ausgebildet ist, auf der die Absolutadressen so ausgebildet sind, daß der Reflexionsfaktor von Licht, z. B. durch einen Phasenübergang hervorgerufen, dort geändert ist.

6. Gerät nach einem der Ansprüche 1 bis 4, das zur Verwendung mit einer Aufzeichnungsplatte ausgebildet ist, bei der Information unter Verwendung eines magnetooptischen Effekts, eines Phasenübergangs oder dergleichen aufgezeichnet oder gelöscht wird.

7. Gerät nach Anspruch 6, das zur Verwendung mit einer Aufzeichnungsplatte ausgebildet ist, die folgendes aufweist:
- eine Spiralspur (21) oder konzentrische Kreisspuren;
- Absolutadressen (22) in der Form von Aufzeichnungspunkten auf der Spur oder den Spuren;
- einen Informationsaufzeichnungsbereich (24) zum Abspeichern eingegebener Programme, die innerhalb des äußeren Teils der Platte ausgebildet ist; und
- einen TOC-Bereich (23) zum Abspeichern von Zusatzdaten zu den Programmen, die im Informationsaufzeichnungsbereich aufgezeichnet sind und die im innersten Teil der Platte ausgebildet ist.

8. Gerät nach Anspruch 6, bei dem der Abstand zwischen den Absolutadressen (22) der Platte so bestimmt ist, daß eine Adresse pro Sekunde gelesen wird, wenn die Platte beim Abspielen mit vorgegebener Lineargeschwindigkeit gedreht wird.

9. Gerät nach Anspruch 8, bei dem jede Absolutadresse (22) folgendes aufweist:
- eine Präambel, die beim Abspielen zur Synchronisierung verwendet wird;
- eine Adreßmarkierung zum Kennzeichnen des Vorderendes der Absolutadresse;
- eine Adreßnummer zum Kennzeichnen einer Adresse, die ausgehend vom inneren Teil der wiederbeschreibbaren Platte aufeinanderfolgend um jeweils Eins inkrementiert ist; und
- einen Fehlererkennungscode zum Erkennen eines Fehlers, wenn die Adreßnummer erfaßt wird.

10. Gerät nach Anspruch 6, das so betreibbar ist, daß es Information im Informationsaufzeichnungsbereich und im TOC-Bereich der Platte in Form von Informationsrahmen aufzeichnet, wobei jeder Rahmen folgendes aufweist:
- ein Rahmensynchronisiersignal;
- ein Datenfeld mit 24 Datenbytes, wie einem Teil eines Musikprogramms, und 8 Paritätsbytes, die zur Fehlererkennung verwendet werden; und
- einen Untercode mit einer Kennungsnummer und Zeitdaten zum Programm.

11. Gerät nach einem der Ansprüche 1 bis 10, bei dem die Speichereinrichtung einen TOC-Speicher (11) aufweist, der ein Lese/Schreib-Speicher zum Abspeichern von im TOC-Bereich der Aufzeichnungsplatte aufgezeichneten Daten ist.

12. Gerät nach einem der Ansprüche 1 bis 11, bei dem die Zusatzdaten die Kennungsnummern, die Aufzeichnungsstartpositionen und die Aufzeichnungsendpositionen der im Informationsaufzeichnungsbereich abgespeicherten Programm umfassen.

13. Gerät nach einem der Ansprüche 1 bis 11, bei dem die Zusatzdaten Information zu den im Informationsaufzeichnungsbereich aufgezeichneten Programmen umfassen, wie Kennungsnummer, Aufzeichnungsstartpositionen und Aufzeichnungsendpositionen, Aufzeichnungslängen, Stummschaltungen, langsames Lauter- und Leiserwerden, sowie Information zu Vorgängen für kontinuierliches Abspielen mehrerer spezifizierter Programme.

14. Verfahren zum Verarbeiten von Daten in einem TOC-Bereich (23) einer wiederbeschreibbaren Aufzeichnungsplatte (1), die in ein Gerät zum Aufzeichnen und Abspielen von Information eingesetzt ist, wobei das Verfahren die folgenden Schritte umfaßt:
- Aufzeichnen mehrerer Zusatzdaten-Einzelinformationen betreffend jeweilige in einem Informationsaufzeichnungsbereich (24) der Platte aufgezeichnete Informationsprogramme im TOC-Bereich (23), wobei jede Zusatzdaten-Einzelinformation wiederholt in mehreren Blöcken so aufgezeichnet wird, daß die wiederholten Aufzeichnungen betreffend ein spezielles Informationsprogramm eine Spurlänge belegen, die im wesentlichen einer Plattenumdrehung entspricht;
- Beginnen des Lesens der aufgezeichneten Zusatzdaten;
- Erkennen des Vorliegens/Fehlens eines Fehlers beim Lesen einer Einzelinformation aus einem Block;
- Wiederholen des Lesens derselben Zusatzdaten-Einzelinformation aus dem folgenden Block, bis die Einzelinformation mindestens ein Mal fehlerfrei gelesen werden konnte, wenn im Erkennungsschritt ein Fehler erkannt wird;
- Abspeichern der gelesenen Einzelinformation in einem TOC-Speicher (11) des Geräts, wenn die Einzelinformation fehlerfrei gelesen wurde;
- Beurteilen, ob das Wiederherstellen der Zusatzdaten für alle Programme abgeschlossen ist; und
- Zugreifen auf den Speicherort der Zusatzdaten-Einzelinformation, die das nächste Programm betrifft, um den nächsten Lesevorgang auszuführen, wenn die Wiederherstellung der Zusatzdaten für alle Programme nicht abgeschlossen ist, wobei der Zugriff auf diese nächste Einzelinformation durch einen Spursprungvorgang ausgeführt wird.

15. Verfahren nach Anspruch 14, ferner mit den folgenden Schritten:
- Editieren der Zusatzdaten-Einzelinformationen, wie sie im TOC-Speicher abgespeichert sind, wenn die Wiederherstellung der Zusatzdaten für alle Programme abgeschlossen ist; und
- Wiederabspeichern der editierten Zusatzdaten im TOC-Speicher.

16. Verfahren nach Anspruch 15, ferner mit den folgenden Schritten:
- Ausführen, hinsichtlich jeder Zusatzdaten-Einzelinformation, eines Aufzeichnungszyklus, der dem Aufzeichnungsschritt von Anspruch 14 entspricht; und
- Wiederholen jedes Aufzeichnungszyklus mehrere Male.

17. Verfahren nach Anspruch 16, ferner mit den folgenden Schritten:
- Lesen der Zusatzdaten-Einzelinformation mit derselben Anzahl von Malen, wie sie der Anzahl wiederholter Aufzeichnungen entspricht;
- Beurteilen, ob jede Einzelinformation aller Zusatzdaten mindestens ein Mal fehlerfrei gelesen wurde;
- Beenden des Lesevorgangs, wenn jede Zusatzdaten-Einzelinformation mindestens ein Mal fehlerfrei gelesen wurde; und
- Beginnen des Lesens der Zusatzdaten-Einzelinformationen, die beim nächsten Aufzeichnungszyklus aufgezeichnet wurden, und wiederholtes Lesen der Einzelinformationen, bis jede Einzelinformation aller Zusatzdaten mindestens ein Mal fehlerfrei gelesen wurde, wenn einer der Zusatzdatenwerte beim vorigen Aufzeichnungszyklus nicht fehlerfrei gelesen wurde.

18. Verfahren nach Anspruch 15, bei dem der Editierschritt folgende Schritte aufweist:
- Vergleichen der Zusatzdaten-Einzelinformationen folgend auf die Einspeicherung in einen TOC-Speicher (11) des Geräts;
- Anordnen der Programme in einer Folge auf solche Weise, daß ein Programm, dessen Aufzeichnungsstartposition an einer niedrigeren Adresse liegt, früher angeordnet wird, was auf Grundlage der Aufzeichnungsstartposition und der Aufzeichnungsendposition jedes Programms erfolgt, wobei die Positionen aus den Zusatzdaten erhalten werden;
- Beurteilen, ob ein Programm über einem anderen Programm im Informationsaufzeichnungsbereich aufgezeichnet ist;
- Auswählen einer der Zusatzdaten-Einzelinformationen als wirksamer Datenwert entsprechend den überlappenden Programmen und Löschen der anderen, wenn erkannt wird, daß ein Programm über einem anderen Programm aufgezeichnet ist, wobei die ausgewählte Einzelinformation weiter hinten im TOC-Bereich lag; und
- Zuordnen neuer Kennungsnummern zur neuen Gruppe wirksamer Zusatzdaten-Einzelinformationen, die die so ausgewählte Einzelinformation enthält, auf solche Weise, daß eine Einzelinformation zu einem Programm, dessen Aufzeichnungsstartposition an einer niedrigeren Absolutadresse liegt, eine kleinere Kennungsnummer aufweist.

## Revendications

1. Appareil pour enregistrer et reproduire des programmes d'informations sur et depuis un disque d'enregistrement réinscriptible (1) comportant des adresses absolues (22), le disque comprenant une zone d'enregistrement d'informations (24) pour stocker les programmes d'informations d'entrée et une zone TOC (Table des matières) (23) pour stocker des données supplémentaires concernant les programmes d'informations stockés dans ladite zone d'enregistrement d'informations, l'appareil comprenant:
des moyens d'enregistrement aptes à enregistrer successivement les éléments de données supplémentaires dans la zone TOC, de telle manière que chaque élément soit enregistré de façon répétée n fois, n représentant un nombre entier tel que n>1, chaque élément comprenant au moins un numéro d'identification correspondant à un programme stocké dans la zone d'enregistrement d'informations et à l'emplacement de stockage du programme conformément à ses adresses absolues; et
des moyens de lecture aptes à lire de façon répétée chaque élément de données supplémentaires qui a été enregistré de façon répétée dans la zone TOC, et à stocker l'élément lu dans des moyens formant mémoire (11) de l'appareil;
caractérisé:
en ce que lesdits moyens d'enregistrement sont conçus pour enregistrer les enregistrements répétés de chaque élément de données supplémentaires, se rapportant à un programme d'informations particulier, sur une longueur de piste qui correspond sensiblement à une rotation du disque;
en ce que lesdits moyens de lecture sont conçus pour effectuer les opérations de lecture répétées portant sur chaque élément par la lecture de différents enregistrements dudit élément jusqu'à ce que l'élément ait été lu sans erreur n-α fois, α représentant un nombre entier positif tel que α<n, un tel élément étant lu au moins une fois au moment où le disque d'enregistrement est installé dans l'appareil; et par
des moyens d'accès aptes à accéder à l'emplacement de stockage de l'élément de données supplémentaires auquel le numéro d'identification suivant est affecté lorsque l'élément précédent a été lu sans erreur comme dit ci-dessus, l'accès à cet élément suivant étant effectué par une opération de saut de piste.

2. Appareil selon la revendication 1, dans lequel:
lesdits moyens d'enregistrement sont aptes à enregistrer des données supplémentaires mises à jour dans la zone TOC en répétant un cycle d'enregistrement une multiplicité de fois, le cycle d'enregistrement étant un processus suivant lequel chaque élément de données supplémentaires stocké dans les moyens formant mémoire est enregistré de façon répétée dans la zone TOC n-β fois, β représentant un nombre entier positif tel que β<n.

3. Appareil selon la revendication 1 ou la revendication 2, dans lequel les moyens d'enregistrement sont aptes à enregistrer dans la zone TOC d'un dit disque d'enregistrement dont la zone d'enregistrement d'informations contient déjà un ou plusieurs dits programmes, de nouvelles données supplémentaires relatives à un programme nouvellement enregistré, au niveau d'une position dans ladite zone TOC qui fait suite aux données supplémentaires, ou à une séquence de celles-ci, se rapportant au programme ou aux programmes d'informations déjà enregistré(s), et les moyens de lecture sont aptes à lire et stocker dans les moyens formant mémoire (11) les données supplémentaires enregistrées dans la zone TOC, l'appareil comprenant, en outre:
des moyens de commande d'édition (6) pour (a) exécuter une commande d'édition comprenant les étapes consistant (i) à déterminer, d'après les éléments de données supplémentaires stockés dans les moyens formant mémoire, si un programme contenu dans la zone d'enregistrement d'informations chevauche un ou plusieurs programmes enregistrés précédemment, (ii) à sélectionner l'élément de données supplémentaires correspondant uniquement au programme nouvellement enregistré parmi les programmes à chevauchement s'il est déterminé qu'un programme est enregistré sur un ou plusieurs autres, et (iii) à affecter de nouveaux numéros d'identification au nouveau groupe d'éléments de données supplémentaires qui comprend l'élément de données ainsi sélectionné et omet l'élément ou les éléments de données non sélectionné(s), et pour (b) permettre aux moyens formant mémoire de stocker le nouveau groupe de données supplémentaires après l'opération d'édition, et aux moyens d'enregistrement d'enregistrer le nouveau groupe de données supplémentaires dans la zone TOC.

4. Appareil selon la revendication 3, dans lequel l'affectation de nouveaux numéros d'identification au nouveau groupe de données supplémentaires par les moyens de commande d'édition (6) s'effectue de telle manière qu'un élément correspondant à un programme dont la position de début d'enregistrement est située dans une adresse inférieure comporte un numéro d'identification plus petit.

5. Appareil selon l'une quelconque des revendications 1 à 4, adapté en vue d'être utilisé avec un dit disque d'enregistrement dans lequel lesdites adresses absolues sont formées de telle sorte que le facteur de réflexion de la lumière, provenant, par exemple, d'une transition de phase, soit modifié à cet endroit.

6. Appareil selon l'une quelconque des revendications 1 à 4, adapté en vue d'être utilisé avec un dit disque d'enregistrement dans lequel des informations sont enregistrées et effacées en utilisant un effet optomagnétique, une transition de phase, ou phénomène analogue.

7. Appareil selon la revendication 6, adapté pour être utilisé avec un dit disque d'enregistrement qui comprend:
une piste en spirale (21) ou des pistes circulaires concentriques;
des adresses absolues (22) se présentant sous la forme de micro-cuvettes sur la piste ou les pistes;
une zone d'enregistrement d'informations (24) pour stocker des programmes d'entrée formée dans la partie extérieure du disque; et
une zone TOC (23) pour stocker des données supplémentaires concernant les programmes enregistrés dans la zone d'enregistrement d'informations, formée dans la partie la plus intérieure du disque.

8. Appareil selon la revendication 6, dans lequel l'espacement entre les adresses absolues (22) du disque est déterminé de façon à ce qu'une adresse soit lue par seconde à la condition que le disque soit entraîné en rotation à une vitesse linéaire spécifiée au moment de la reproduction.

9. Appareil selon la revendication 8, dans lequel chaque adresse absolue (22) comprend:
un préambule utilisé pour la commande synchrone au moment de la reproduction;
un repère d'adresse pour indiquer l'extrémité avant de l'adresse absolue;
un numéro d'adresse pour indiquer une adresse, qui est successivement augmentée de un vers l'extérieur à partir de la partie intérieure du disque réinscriptible; et
un code de détection d'erreur pour détecter une erreur lorsque le numéro d'adresse est détecté.

10. Appareil selon la revendication 6, l'appareil étant apte à enregistrer des informations dans la zone d'enregistrement d'informations et dans la zone TOC du disque en tant que trames d'informations, chaque trame comprenant:
un signal de synchronisation de trame;
un zone de données comprenant 24 octets de données, telles qu'une partie d'un programme musical, et 8 octets de parité utilisés pour la détection d'erreur; et
un sous-code contenant un numéro d'identification et les données de durée du programme.

11. Appareil selon l'une quelconque des revendications 1 à 10, dans lequel lesdits moyens formant mémoire comprennent une mémoire TOC (11) qui est une mémoire de lecture/écriture servant à stocker des données enregistrées dans la zone TOC dudit disque d'enregistrement.

12. Appareil selon l'une quelconque des revendications 1 à 11, dans lequel lesdites données supplémentaires comprennent les numéros d'identification, les positions de début d'enregistrement et les positions de fin d'enregistrement des programmes enregistrés dans la zone d'enregistrement d'informations.

13. Appareil selon l'une quelconque des revendications 1 à 11, dans lequel lesdites données supplémentaires comprennent des informations sur les programmes enregistrés dans la zone d'enregistrement d'informations, telles que les numéros d'identification, les positions de début d'enregistrement et les positions de fin d'enregistrement, les longueurs d'enregistrement, l'amortissement des silences, l'augmentation/diminution graduelle et des informations sur des procédures pour reproduire en continu une multiplicité de programmes spécifiés.

14. Procédé de traitement de données d'une zone TOC (23) d'un disque d'enregistrement réinscriptible (1) installé dans un appareil d'enregistrement et de reproduction d'informations, le procédé comprenant les étapes consistant:
à enregistrer dans ladite zone TOC (23) une multiplicité d'éléments de données supplémentaires relatifs à des programmes d'informations respectifs enregistrés dans une zone d'enregistrement d'informations (24) du disque, chaque élément de données supplémentaires étant enregistré de façon répétée dans une multiplicité de blocs de sorte que les enregistrements répétés relatifs à un programme d'informations particulier occupent une longueur de piste qui correspond sensiblement à une rotation du disque;
à déclencher la lecture des données supplémentaires enregistrées;
à détecter la présence/absence d'une erreur affectant la lecture d'un élément dans un bloc;
à répéter la lecture du même élément de données supplémentaires dans le bloc suivant jusqu'à ce que l'élément puisse être lu sans erreur au moins une fois, lorsqu'une erreur est détectée lors de l'étape de détection;
à stocker l'élément lu dans une mémoire TOC (11) dudit appareil, lorsque l'élément est lu sans erreur;
à déterminer si l'extraction de données supplémentaires concernant tous les programmes est terminée; et
à accéder à l'emplacement de stockage de l'élément de données supplémentaires relatif au programme suivant pour effectuer l'opération de lecture suivante, lorsque l'extraction de données supplémentaires concernant tous les programmes n'est pas terminée, l'accès à cet élément suivant étant effectué par une opération de saut de piste.

15. Procédé selon la revendication 14, comprenant, en outre, les étapes consistant:
à éditer les éléments de données supplémentaires stockés dans la mémoire TOC, lorsque l'extraction de données supplémentaires concernant tous les programmes est terminée; et
à rétablir les données supplémentaires éditées dans la mémoire TOC.

16. Procédé selon la revendication 15, comprenant, en outre, les étapes consistant:
à effectuer, relativement à chaque élément de données supplémentaires, un cycle d'enregistrement correspondant à l'étape d'enregistrement de la revendication 14; et
à répéter chaque cycle d'enregistrement une multiplicité de fois.

17. Procédé selon la revendication 16, comprenant, en outre, les étapes consistant:
à lire l'élément de données supplémentaires autant de fois que le nombre d'enregistrements répétitifs;
à déterminer si chaque élément de toutes les données supplémentaires a été lu sans erreur au moins une fois;
à mettre fin à l'opération de lecture si chaque élément de données supplémentaires a été lu sans erreur au moins une fois; et
à déclencher la lecture des éléments de données supplémentaires enregistrés au cours du cycle d'enregistrement suivant, et à lire de façon répétée les éléments jusqu'à ce que chaque élément de toutes les données supplémentaires ait été lu au moins une fois sans erreur, si l'une quelconque des données supplémentaires au cours du cycle d'enregistrement précédent n'a pas été lue sans erreur.

18. Procédé selon la revendication 15, dans lequel l'étape d'édition comprend les étapes consistant:
à comparer les éléments desdites données supplémentaires suite au stockage dans une mémoire TOC (11) dudit appareil;
à disposer les programmes suivant une séquence de telle manière qu'un programme dont la position de début d'enregistrement se trouve dans une adresse inférieure soit placé antérieurement, sur la base de la position de début d'enregistrement et de la position de fin d'enregistrement de chaque programme, les positions étant obtenues à partir des données supplémentaires;
à déterminer si un programme est enregistré sur un autre programme dans la zone d'enregistrement d'informations;
à sélectionner, en tant que données effectives, l'un des éléments parmi les éléments de données supplémentaires correspondant aux programmes à chevauchement et à effacer l'autre, lorsqu'il est déterminé qu'un programme est enregistré sur un autre programme, l'élément sélectionné ayant été placé postérieurement dans la zone TOC; et
à affecter de nouveaux numéros d'identification au nouveau groupe d'éléments de données supplémentaires effectives contenant l'élément ainsi sélectionné, de telle manière qu'un élément correspondant à un programme, dont la position de début d'enregistrement est située dans une adresse absolue inférieure, ait un numéro d'identification plus petit.
